# FASCICULE DE BREVET EUROPEEN

(11) **EP 0 552 096 B1**
(45) Date de publication et mention de la délivrance du brevet: **16.10.1996**
(21) Numéro de dépôt: 93400068.8
(22) Date de dépôt: 13.01.1993
(51) Int. Cl.: B23K 1/08, B23K 35/38

(54) **Procédé d'application de composition de soudure sur des broches de composants électroniques**
Verfahren zum Aufbringen einer Lotlegierung auf die Anschlussfahnen elektronischer Bausteine
Method for applying a solder composition to the leads of electronic components

(30) Priorité: 13.01.1992 FR 9200239
(43) Date de publication de la demande: 21.07.1993
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Mellul, Sylvie, F-94400 Vitry (FR); Claverie, Pierre, F-92100 Boulogne Billancourt (FR)
(74) Mandataire: Le Moenner, Gabriel

(56) Documents cités:
- DE-A- 3 813 931
- FR-A- 2 653 448

## Description

La présente invention concerne un procédé d'application de composition de soudure sur des broches ou terminaux de contact de composants électroniques, typiquement pour le pré-étamage de ces derniers ou pour le brasage du composant sur une carte électronique, comprenant l'étape d'amener les broches en contact avec au moins une vague de composition de soudure dans un poste de soudage à la vague dont le bain est exposé à une atmosphère contrôlée à faible teneur en oxygène, maintenue dans un capotage enclosant au moins la surface du bain.

Un des problèmes majeurs rencontrés lors de l'utilisation de machines de soudage à la vague est l'oxydation du bain de soudure liquide, cette oxydation créant à la surface du bain un film ou des scories d'oxyde qui peuvent considérablement altérer le brasage ou l'étamage des composants et qui obèrent les coûts de production. Une première solution pour réduire la formation de scories à la surface du bain de soudure consiste à associer au bac de soudure un capotage enclosant au moins le bain et contenant un gaz inerte, typiquement de l'azote, constituant le ciel gazeux du bain. Une telle technique est décrite par exemple dans la demande de brevet français N° 2.670986 au nom de la Demanderesse.

On peut citer également, pour illustrer cette approche de mise en place d'une "couverture" d'un gaz inerte au-dessus de tout ou partie du bain de soudure, le document US-A-3.705.457.

Quoique de telles techniques permettent de réduire considérablement l'oxydation du bain de soudure, la teneur en oxygène ne peut pas en pratique, en raison de fuites et d'entrées d'air le long du trajet du composant, être réduite à des valeurs extrêmement faibles, de l'ordre du ppm.

La présente invention a pour objet de proposer un procédé du type sus-mentionné permettant, de façon simple, efficace et peu onéreuse, de réduire très fortement les teneurs en espèces oxydantes résiduelles, notamment l'oxygène, au-dessus du bain de soudure.

Pour ce faire l'invention, a pour objet un procédé d'élaboration d'une atmosphère contrôlée tel que défini dans la revendication 1.

On notera que le document US-A-4.646.958 (IBM) décrit un procédé de montage de puces de semi-conducteurs sur des substrats céramiques dans lequel la refusion des plots de soudage (bumps) non fluxés et leur adhérence sur le substrat céramique s'effectue dans un four de refusion sous une atmosphère neutre ou réductrice contenant des proportions importantes de silane, typiquement 2 %, le silane étant utilisé ici pour ses capacités de réduction des oxydes solides de plomb et d'étain se formant dans les plots lors de leur chauffage à température de fusion.

Selon un aspect préféré de l'invention, l'atmosphère contrôlée est élaborée en deux temps, a) en introduisant dans le capotage le gaz neutre pour ramener la teneur en oxygène résiduelle à une valeur inférieure à 200 ppm, puis b) en introduisant dans le capotage le gaz neutre et l'hydrure de silicium gazeux à une teneur supérieure à quatre fois la teneur en oxygène résiduelle dans l'atmosphère contrôlée en fin de phase a). Plus spécifiquement, dans une première phase de l'étape b), l'hydrure de silicium est introduit à une première teneur, entre 10 et 20 fois, typiquement de l'ordre de 10 à 15 fois la teneur en oxygène résiduelle en fin de phase a), puis dans une deuxième phase de l'étape b) l'hydrure de silicium est introduit à une deuxième teneur inférieure à la première teneur, typiquement inférieure à la moitié de la première teneur.

D'autres caractéristiques et avantages de la présente invention ressortiront de la description suivante de modes de réalisation, donnée à titre illustratif mais nullement limitatif.

Dans un capotage définissant un volume intérieur surplombant un bain de soudure d'un poste de soudage ou d'étamage à la vague et traversé par le trajet de composants à braser ou étamer, on injecte de l'azote de pureté électronique, c'est-à-dire ayant une teneur en oxygène inférieure à 10 ppm. Avec un débit d'azote de l'ordre de 3,5 m³/h injecté à l'aplomb du bain de soudure, on obtient une teneur en oxygène résiduelle, mesurée au niveau de la surface du bain de soudure, inférieure à 10 ppm. Dans ces conditions, correspondant à la technologie connue, le poids de scories à la surface du bain est ramené à 20 g/heure au lieu de 900 g/heure lorsque le bain est exposé à l'air.

### Exemple 1

Selon l'invention, on injecte alors dans le ciel gazeux au-dessus du bain de soudure un mélange d'azote et d'hydrure de silicium, typiquement du monosilane. Pour obtenir une teneur en oxygène résiduelle inférieure au ppm, compte tenu de la géométrie du bac de soudure et du capotage le surplombant, on introduit dans ce dernier l'hydrure de silicium à une teneur supérieure à quatre fois, typiquement de l'ordre de onze fois la teneur moyenne en oxygène résiduelle avant introduction de l'hydrure de silicium, soit, avec un rapport R hydrure/oxygène de 10, un débit d'environ 0,3 litre/heure (100 ppm) de monosilane pour un débit gazeux global injecté dans le capotage de l'ordre de 3,5 m³/heure. Après environ 7 minutes d'injection de ce mélange, la valeur résiduelle en oxygène au-dessus du bain de soudure tombe à une valeur inférieure à 1 ppm. On injecte alors dans le ciel gazeux du bain, et pour la suite du processus, une teneur plus faible d'hydrure de silicium, typiquement légèrement inférieure à la moitié de la teneur initiale, soit un débit inférieur à 0,15 litre/heure (50 ppm) de silane pour un même débit gazeux global introduit dans le capotage. La teneur résiduelle en oxygène étant ramenée à un niveau inférieur à 1 ppm, le poids de scories formé à la surface du bain est ramené à une valeur inférieure à 2 g/heure.

### Exemple N° 2

On injecte, cette fois, dans le ciel gazeux au-dessus du bain un débit réduit d'azote (de l'ordre de 2 m³/h) permettant d'atteindre à la surface du bain de soudure une teneur en oxygène résiduelle de l'ordre de 100 ppm, ce qui correspondrait, pour un process continu d'étamage ou de brasage de composants, à un poids de scories formé d'environ 140 g/heure. Selon l'invention, comme précédemment, pour réduire la teneur en oxygène à une valeur de l'ordre de 1 ppm, on injecte alors dans le ciel gazeux du bain un mélange d'azote et de monosilane à une teneur correspondant à environ 10 fois la teneur en oxygène résiduelle avec l'azote seul, soit un débit d'environ 4 litres/heure (1000 ppm) de silane pour un même débit gazeux global d'environ 3,5 m³/heure introduit dans le capotage. Comme dans l'exemple précédent, après environ 7 minutes d'injection de ce mélange, la teneur résiduelle en oxygène à la surface du bain devient inférieure à 1 ppm. On réduit alors, pour la suite du processus, la quantité de silane injecté avec l'azote dans le capotage surplombant le bain à un débit de silane inférieur à 2 litres/heure (500 ppm) pour entretenir une atmosphère contrôlée identique à celle de l'exemple précédent.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

En particulier, selon les utilisations, le silane peut être injecté indépendamment de l'azote dans le capotage de protection, au-dessus du bain et, en place et lieu d'azote pur, le gaz neutre peut être constitué d'argon, d'hélium, ou d'un mélange de ces gaz avec de l'azote.

## Revendications

1. Procédé d'élaboration d'une atmosphère contrôlée, utilisée au-dessus du bain de soudure d'une machine de soudage à la vague, durant des opérations où la composition de soudure du bain est appliquée sur les broches d'un composant électronique, ladite atmosphère contrôlée étant maintenue dans un capotage enclosant au moins la surface du bain, selon lequel on procède aux étapes suivantes :
a) on introduit dans le capotage un gaz neutre pour amener la teneur en oxygène résiduel au dessus du bain de soudure au dessous d'une première valeur ;
b) on introduit dans le capotage un mélange gazeux comprenant le gaz neutre et un hydrure de silicium, pour obtenir au dessus du bain de soudure ladite atmosphère contrôlée, comprenant le gaz neutre et l'hydrure de silicium à une teneur comprise entre 50 x 10⁻⁶ et 2 x 10⁻³, en volume de ladite atmosphère contrôlée, et dont la teneur résiduelle en oxygène a été abaissée au dessous de 10 ppm, préférentiellement au dessous de 1 ppm.

2. Procédé selon la revendication 1, caractérisé en ce que la première valeur de l'étape a) se situe en dessous de 200 ppm.

3. Procédé selon la revendication 1 ou 2, caractérisé en ce que la teneur en hydrure de silicium dudit mélange gazeux est supérieure à quatre fois ladite première valeur.

4. Procédé selon la revendication 3, caractérisé en ce que, dans une première phase de l'étape b), on introduit un premier mélange gazeux, à une première teneur en hydrure de silicium, égale à 10 à 20 fois ladite première valeur, puis dans une deuxième phase, on introduit un second mélange gazeux, a une seconde teneur en hydrure de silicium, inférieure à ladite première teneur en hydrure de silicium.

5. Procédé selon l'une des revendications 1 à 4, caractérisé en ce que, durant la phase b), l'hydrure de silicium est pré-mélangé avec le gaz neutre pour obtenir ledit mélange gazeux.

6. Procédé selon l'une des revendications 1 à 4, caractérisé en ce que, durant la phase b), l'hydrure de silicium est injecté séparément dans ledit capotage.

7. Procédé selon l'une des revendications 1 à 6, caractérisé en ce que, ledit gaz neutre est l'azote ou l'un des gaz du groupe constitué de l'argon et l'hélium, ou d'un mélange de ces gaz avec de l'azote.

8. Procédé selon l'une des revendications 1 à 6, caractérisé en ce que le gaz neutre est de l'azote dont la teneur en oxygène résiduel est inférieure à 10 ppm.

9. Procédé selon l'une des revendications précédentes, caractérisé en ce que l'hydrure de silicium est le monosilane.

## Claims

1. Method of producing a controlled atmosphere, used above the solder bath of a wave soldering machine, during operations in which the solder composition of the bath is applied to the pins of an electronic component, the said controlled atmosphere being maintained within a shroud enclosing at least the surface of the bath, in which method the following steps are carried out:
a) an inert gas is introduced into the shroud in order to bring the residual oxygen content above the solder bath to below a first value;
b) a gas mixture comprising the inert gas and a silicon hydride is introduced into the shroud in order to obtain, above the solder bath, the said controlled atmosphere, comprising the inert gas and the silicon hydride with a content of between 50 × 10⁻⁶ and 2 × 10⁻³, in terms of volume of the said controlled atmosphere, and the residual oxygen content of which has been lowered to below 10 ppm, preferably to below 1 ppm.

2. Method according to Claim 1, characterized in that the first value in step a) lies below 200 ppm.

3. Method according to Claim 1 or 2, characterized in that the silicon hydride content of the said gas mixture is greater than four times the said first value.

4. Method according to Claim 3, characterized in that, in a first phase of step b), a first gas mixture is introduced which has a first silicon hydride content, equal to 10 to 20 times the said first value, and then, in a second phase, a second gas mixture is introduced which has a second silicon hydride content, of less than the said first silicon hydride content.

5. Method according to one of Claims 1 to 4, characterized in that, during phase b), the silicon hydride is premixed with the inert gas in order to obtain the said gas mixture.

6. Method according to one of Claims 1 to 4, characterized in that, during phase b), the silicon hydride is injected separately into the said shroud.

7. Method according to one of Claims 1 to 6, characterized in that, the said inert gas is nitrogen or one of the gases of the group consisting of argon and helium or of a mixture of these gases with nitrogen.

8. Method according to one of Claims 1 to 6, characterized in that the inert gas is nitrogen whose residual oxygen content is less than 10 ppm.

9. Method according to one of the preceding claims, characterized in that the silicon hydride is monosilane.

## Patentansprüche

1. Verfahren zur Erzeugung einer kontrollierten Atmosphäre, welche oberhalb eines Lotbades einer Wellenlötmaschine während der Arbeitsgänge, wo die Lotzusammenstellung des Bades auf die Anschlußfahnen eines elektronischen Bausteines aufgetragen wird, verwendet wird, wobei besagte kontrollierte Atmosphäre in einer Verkleidung aufrechterhalten wird, die mindestens die Oberfläches des Bades einschließt, gemäß welchem man nach folgenden Schritten verfährt:
a) Man führt in die Verkleidung ein neutrales Gas ein, um den Gehalt an Restsauerstoff oberhalb des Lötbades unterhalb eines ersten Wertes zu bringen;
b) man führt in die Verkleidung eine Gasmischung ein, welche das neutrale Gas und einen Siliziumwasserstoff enthält, um über dem Lötbad besagte kontrollierte Atmosphäre zu erzielen, welche das neutrale Gas und den Siliziumwasserstoff mit einem Gehalt, welcher zwischen 50 x 10⁻⁶ und 2 x 10⁻³ liegt, im Volumen der besagten kontrollierten Atmosphäre enthält und wobei der Restgehalt an Sauerstoff unterhalb von 10 ppm, bevorzugt unterhalb von 1 ppm, abgesenkt worden ist.

2. Verfahren nach Anspruch 1, dadurch gekennzeichnet, daß der erste Wert des Schrittes a) sich unterhalb von 200 ppm befindet.

3. Verfahren nach Anspruch 1 oder 2, dadurch gekennzeichnet, daß der Gehalt an Siliziumwasserstoff des Gasgemisches vierfach höher als der besagte erste Wert ist.

4. Verfahren nach Anspruch 3, dadurch gekennzeichnet, daß in einer ersten Phase des Schrittes b) man eine erste Gasmischung mit einem ersten Gehalt an Siliziumwasserstoff einführt, welcher das zehn- bis zwanzigfache des besagten ersten Wertes beträgt, dann, in einer zweiten Phase, führt man eine zweite Gasmischung mit einem zweiten Gehalt an Siliziumwasserstoff ein, welcher niedriger ist als besagter erster Gehalt an Siliziumwasserstoff.

5. Verfahren nach einem der Ansprüche 1 bis 4, dadurch gekennzeichnet, daß während der Phase b) der Siliziumwasserstoff mit dem neutralen Gas vorgemischt ist, um besagte Gasmischung zu erzielen.

6. Verfahren nach einem der Ansprüche 1 bis 4, dadurch gekennzeichnet, daß während der Phase b) der Siliziumwasserstoff abgetrennt in besagte Verkleidung eingeführt wird.

7. Verfahren nach einem der Ansprüche 1 bis 6, dadurch gekennzeichnet, daß besagtes neutrales Gas Stickstoff oder eines der Gase der Gruppe, welche sich aus Argon und Helium zusammensetzt, oder eine Mischung dieser Gase mit Stickstoff ist.

8. Verfahren nach einem der Ansprüche 1 bis 6, dadurch gekennzeichnet, daß das neutrale Gas Stickstoff ist, dessen Restsauerstoffgehalt geringer als 10 ppm ist.

9. Verfahren nach einem der vorhergehenden Ansprüche, dadurch gekennzeichnet, daß der Siliziumwasserstoff das Silan ist.
